# FASCICULE DE BREVET EUROPEEN

(11) **EP 0 841 992 B1**
(45) Date de publication et mention de la délivrance du brevet: **22.03.2000**
(21) Numéro de dépôt: 96927745.8
(22) Date de dépôt: 05.08.1996
(51) Int. Cl.: B05D 7/18, A44C 27/00

(54) **PROCEDE DE TRAITEMENT DE LA SURFACE D'OBJETS METALLIQUES DESTINES A ETRE PORTES AU CONTACT DE LA PEAU**
VERFAHREN ZUR BEHANDLUNG DER OBERFLÄCHE VON METALLISCHEN GEGENSTÄNDE, DIE AUF DER HAUT GETRAGEN WERDEN
SURFACE TREATMENT METHOD FOR SKIN-CONTACTING METALLIC OBJECTS

(30) Priorité: 04.08.1995 FR 9509500
(43) Date de publication de la demande: 20.05.1998
(73) Titulaire: LESAGE, Christian, F-50110 Tourlaville (FR)
(72) Inventeur: LESAGE, Christian, F-50110 Tourlaville (FR)
(74) Mandataire: L'Helgoualch, Jean
(86) Numéro de dépôt international: FR9601249
(87) Numéro de publication internationale: WO9705966

(56) Documents cités:
- DE-A- 3 917 376
- US-A- 4 761 971
- US-A- 4 861 658
- PATENT ABSTRACTS OF JAPAN vol. 014, no. 370 (C-0747), 10 Août 1990 & JP,A,02 134314 (OSAMU HISANAGA), 23 Mai 1990, cité dans la demande

## Description

La présente invention concerne un procédé de traitement de surface d'objets métalliques d'usage courant, et plus particulièrement un procédé pour le traitement de surface d'objets métalliques destinés à être portés au contact de la peau, tels que des articles de bijouterie ou des accessoires vestimentaires, ainsi que les produits manufacturés traités par un tel procédé.

De nombreuses études ont montré que des contacts prolongés et/ou répétés de la peau avec des surfaces métalliques peuvent provoquer des lésions chez de nombreuses personnes exposées aux allergies aux métaux. Les allergies au chrome, au nickel, au cobalt et au cuivre sont les plus fréquemment observées, mais des allergies à d'autres métaux tels que l'or et, plus rarement l'argent, ont aussi été signalées. Ces allergies sont essentiellement dues à la migration des ions métalliques vers l'épiderme, au contact de la peau. Elles se manifestent souvent par des dermites, des dermatoses ou des eczémas de contact et peuvent être provoquées notamment par le port de bijoux de fantaisie tels que boucles d'oreilles, colliers, bracelets, bagues, chaînes métalliques, ainsi que par divers accessoires vestimentaires tels que boucles de ceintures, boutons et agrafes métalliques, etc, ou par des branches de lunettes, des boucles de bracelets-montres, ou encore par des bracelets-montres métalliques.

D'autre part, la surface métallique peut aussi être altérée par un contact prolongé avec la peau, plus particulièrement en cas de transpiration, entraînant une oxydation du métal, accompagnée d'un noircissement, d'un ternissement et d'une perte d'éclat qui constitue un inconvénient important dans le cas des bijoux de fantaisie.

Ces manifestations d'allergies, notamment sous forme de dermites ou dermatoses, et ces effets sur le métal, décrits ci-dessus, sont plus importants en cas de fortes chaleurs, par exemple en été, provoquant la transpiration des personnes portant des bijoux de fantaisie ou des accessoires métalliques vestimentaires.

L'utilisation de l'aluminium ne répond pas aux besoins de la bijouterie, bien qu'il soit peu allergisant, car il noircit la peau, tandis que l'argent est trop cher pour pouvoir être utilisé en quantité importante dans les bijoux de fantaisie.

Diverses solutions ont été proposées, soit pour limiter les effets des allergies, par exemple en administrant des médicaments à base de corticoïdes, soit pour empêcher un contact direct entre la peau et le métal.

Ainsi, le brevet US-A-4.861.658 propose d'incorporer un allergène dans une couche à base de xylylène enduite sur des bijoux pour les rendre hypoallergéniques. Le brevet DE-A-3.917.376 décrit une laque à base de résine acrylique dans un mélange de solvants, déposée à l'état liquide sur les objets métalliques à protéger. Le brevet japonais 2-134.314 décrit l'utilisation d'une résine à base d'alcool polyvinylique en solution dans un solvant du type cétone, appliquée à la surface de l'objet métallique à protéger. Après séchage, cette résine forme une couche d'interposition entre le métal et la peau.

Cependant, des études ont montré que l'alcool polyvinylique et les dérivés vinyliques, ainsi que les résines acryliques et des acrylates (par exemple le méthacrylate de méthyle) sont des composés très allergisants qui peuvent provoquer des irritations de la peau.

Au contraire, dans le cadre des études ayant abouti à la mise au point de la présente invention, on a constaté que des dérivés cellulosiques, et plus particulièrement l'acétate de cellulose et l'acéto-butyrate de cellulose, pouvaient constituer une barrière ionique suffisamment efficace, et résistante aux frottements et à l'abrasion, sans nuire à l'éclat du métal, dans le cas des bijoux de fantaisie et des accessoires métalliques vestimentaires.

La présente invention a donc pour objet un procédé de traitement de surface d'objets métalliques destinés à être portés au contact de la peau de manière répétée et/ou prolongée, tels que des articles de bijouterie de fantaisie et des accessoires métalliques vestimentaires, de manière à former une barrière ionique limitant ou empêchant toute migration des ions métalliques, sans nuire cependant à l'éclat du métal.

L'invention a également pour objet les objets métalliques non allergisants à usage de bijoux de fantaisie ou d'accessoires métalliques vestimentaires recouverts, au moins en partie, d'une couche externe à base de dérivé cellulosique appliquée par le traitement ci-dessus.

Le procédé de traitement de surface d'objets métalliques suivant la présente invention consiste à appliquer une couche à base d'un dérivé cellulosique sur la surface des objets, au moins sur la partie de la surface destinée à être portée au contact de la peau, en une épaisseur suffisante pour procurer une résistance au frottement contre la peau.

La couche déposée sur l'objet métallique est de préférence transparente pour n'être pas visible à l'oeil nu.

Suivant la présente invention, il est avantageux que l'épaisseur de la couche cellulosique déposée sur la surface métallique soit comprise entre 30 µm et 300 µm, et de préférence entre 50 µm et 150 µm.

Le dérivé cellulosique peut être choisi parmi les esters et les éthers de cellulose solubles dans l'eau ou les solvants organiques, la nitro-cellulose, et plus particulièrement l'acétate de cellulose et l'acéto-butyrate de cellulose, isolément ou en mélange.

Conformément à la présente invention, le dérivé cellulosique est mis en solution dans un solvant approprié, et appliqué sur la surface de l'objet métallique, par exemple par pulvérisation ou par trempage.

La solution de trempage ou de pulvérisation peut contenir divers plastifiants, tels qu'un phtalate de di-octyle ou de dibutyle, ou un époxyde à bas poids moléculaire, ou des additifs destinés à favoriser la formation de la couche protectrice, tels que des cires de polyéthylène, des huiles silicones de basse viscosité ou de l'acide phosphorique.

Le cas échéant, il peut être avantageux d'effectuer un pré-traitement, par application d'une sous-couche ou d'une couche primaire, directement sur la surface métallique à protéger, pour faciliter l'accrochage de la couche de dérivé cellulosique transparent. On peut par exemple appliquer une sous-couche à base d'un dérivé polyvinylique tel qu'un butyral polyvinylique ou un acétochlorure polyvinylique, ou de polyuréthanne.

Les études effectuées sur des patients ont montré que les objets métalliques dont la surface avait été traitée conformément à la présente invention, sont très peu allergisants, même après avoir été portés au contact de la peau pendant des durées prolongées.

D'excellents résultats ont été obtenus, même dans des conditions de contact prolongé, comme dans le cas des bijoux de fantaisie constitués par des boucles d'oreilles. C'est en effet dans ce cas où l'on observe généralement le plus grand nombre de réactions allergiques, en raison notamment du mode de fixation de la boucle au lobe de l'oreille, et de l'extrême sensibilité du lobe de l'oreille aux agents allergènes due à la minceur de son épiderme et à sa vascularisation importante.

Une étude a été effectuée sur un groupe de 27 patientes ayant porté des échantillons de boucles d'oreille munies d'un système de fixation du type hameçon, pendant 30 jours. Les patientes ont été sélectionnées parmi un groupe de personnes présentant des antécédents allergiques. Quelques jours avant les essais, des tests (patch-tests) au bichromate, au cobalt et au nickel ont été réalisés pour vérifier la sensibilité des personnes.

Les essais ont été effectués en utilisant deux séries de boucles d'oreilles, une boucle étant en métal dont la surface n'est pas protégée, et l'autre boucle en même métal protégé conformément à l'invention par dépôt d'une couche d'acétate de cellulose. L'attache des boucles d'oreilles testées est du type hameçon.

Les éventuelles réactions d'allergie ont été notées. En cas de réaction d'intolérance, l'essai était arrêté.

On a constaté que dans 19 cas, aucune réaction allergique n'était observée, même après le port des boucles d'oreilles suivant la présente invention de manière continuelle pendant 30 jours, alors que des réactions allergiques avaient été observées pour toutes les patientes dans le cas de boucles non protégées.

Dans 5 cas, un léger prurit a été observé pendant deux ou trois jours au cours de la deuxième semaine (deux cas) ou de la troisième semaine (trois cas), mais la réaction allergique observée était faible et n'a pas empêché la poursuite de l'étude jusqu'au 30ème jour.

Trois patientes ont déclenché des réactions allergiques au boucles d'oreilles protégées suivant la présente invention au bout de deux jours, huit jours et dix jours, respectivement. Ces réactions ont été observées dans des conditions de fortes chaleurs climatiques. L'étude a été interrompue dans ces trois cas. L'examen au microscopes des boucles d'oreilles a mis en évidence une dégradation du revêtement de surface qui peut expliquer la réaction allergique.

Ces résultats confirment l'efficacité du traitement de surface des boucles d'oreilles par formation d'une couche d'acétate de cellulose, conformément à la présente invention, puisque, sur les 27 patientes développant toutes des réactions allergiques dans des conditions usuelles, 24 patientes ont suivi les tests et porté les boucles traitées suivant l'invention pendant 30 jours sans réaction allergique ou avec de très faibles réactions allergiques.

Les exemples suivants, donnés à titre non limitatif, illustrent plus en détail les compositions à base de dérivés cellulosiques utilisables dans le traitement de surface d'objets métalliques suivant la présente invention.

### Exemple 1

On utilise un lot de 50 boucles d'oreilles du commerce, du domaine de la bijouterie de fantaisie, en alliage métallique du cobalt, du nickel et du chrome.

Les boucles d'oreilles sont immergées dans un bain ayant la composition indiquée ci-dessous, maintenu à une température d'environ 20°C.

Le trempage est effectué pendant une durée de 10 secondes environ.

### Composition de la solution (exprimée en parties en poids)

- acétate de cellulose 10
- acétate d'éthyle 50
- méthyl éthyl cétone 40

Les boucles d'oreilles sont séchées sous courant d'air chaud à 50°C environ pendant 2 minutes, puis à l'air libre pendant 30 minutes environ.

Un deuxième trempage est ensuite effectué dans les mêmes conditions pour appliquer une deuxième couche d'acétate de cellulose.

### Exemple 2

On procède comme dans l'Exemple 1, mais en remplaçant l'acétate de cellulose par de l'acéto-butyrate de cellulose.

De plus, avant de procéder au trempage dans la solution d'acéto-butyrate de cellulose, on applique une couche primaire de butyral polyvinylique par trempage dans une solution de marque PSF 738 Bolloré-Gival et on effectue un séchage sous courant d'air chaud pendant 2 minutes, puis à l'air libre, comme dans l'Exemple 1.

La solution utilisée pour l'application de la couche primaire a la composition suivante (exprimée en parties en poids) :
- PSF 738 (butyral polyvinylique) 20
- acétate d'éthyle 79
- acide phosphorique 1

## Revendications

1. Procédé de traitement de la surface d'objets métalliques destinés à être portés au contact de la peau, caractérisé en ce qu'on applique une couche de dérivé cellulosique sur au moins une partie de la surface de l'objet.

2. Procédé selon la revendication 1, caractérisé en ce que le dérivé cellulosique est appliqué sous forme de solution, par trempage ou par pulvérisation.

3. Procédé selon l'une quelconque des revendications 1 et 2, caractérisé en ce que le dérivé cellulosique est choisi parmi un éther de cellulose, un ester de cellulose et la nitro-cellulose, isolément ou en mélange.

4. Procédé selon la revendication 3, caractérisé en ce que le dérivé cellulosique est choisi parmi l'acétate de cellulose et l'acéto-butyrate de cellulose.

5. Procédé selon l'une quelconque des revendications 1 et 2, caractérisé en ce que la solution cellulosique de trempage ou de pulvérisation contient en outre un plastifiant.

6. Procédé selon l'une quelconque des revendications précédentes, caractérisé en ce que la couche de dérivé cellulosique déposée sur l'objet métallique a une épaisseur comprise entre 30 µm et 300 µm.

7. Procédé selon la revendication 1, caractérisé en ce que la surface métallique est soumise à un pré-traitement.

8. Article de bijouterie de fantaisie en métal ou en alliage métallique destiné à être porté au contact de la peau, caractérisé en ce qu'il comporte une couche externe à base de dérivé cellulosique sur au moins une partie de sa surface.

9. Accessoire métallique vestimentaire destiné à être porté au contact de la peau, caractérisé en ce qu'il comporte une couche externe à base de dérivé cellulosique sur au moins une partie de sa surface.

## Claims

1. Process for treating the surface of metal objects which are intended to be worn in contact with the skin, characterized in that a layer of a cellulose derivative is applied to at least part of the surface of the object.

2. Process according to Claim 1, characterized in that the cellulose derivative is applied in the form of a solution by dipping or by spraying.

3. Process according to either of Claims 1 and 2, characterized in that the cellulose derivative is chosen from a cellulose ether, a cellulose ester and nitrocellulose, either alone or as a mixture.

4. Process according to Claim 3, characterized in that the cellulose derivative is chosen from cellulose acetate and cellulose acetobutyrate.

5. Process according to either of Claims 1 and 2, characterized in that the dipping or spraying cellulose solution furthermore contains a plasticizer.

6. Process according to any one of the preceding claims, characterized in that the cellulose derivative layer deposited on the metal object has a thickness of between 30 µm and 300 µm.

7. Process according to Claim 1, characterized in that the metal surface is subjected to a pretreatment.

8. Article of costume jewelry made of metal or of metal alloy intended to be worn in contact with the skin, characterized in that it includes an external layer based on a cellulose derivative on at least part of its surface.

9. Metal clothing accessory intended to be worn in contact with the skin, characterized in that it includes an external layer based on a cellulose derivative on at least part of its surface.

## Patentansprüche

1. Verfahren zur Behandlung der Oberfläche metallischer Gegenstände, die dazu bestimmt sind, in Kontakt mit der Haut getragen zu werden, dadurch gekennzeichnet, daß auf zumindest einen Teil der Oberfläche des Gegenstandes eine Cellulosederivat-Schicht aufgebracht wird.

2. Verfahren nach Anspruch 1, dadurch gekennzeichnet, daß das Cellulosederivat in Form einer Lösung durch Eintauchen oder durch Aufsprühen aufgebracht wird.

3. Verfahren nach einem der Ansprüche 1 und 2, dadurch gekennzeichnet, daß das Cellulosederivat aus Celluloseethern, Celluloseestern und Nitrocellulose, einzeln oder als Gemisch, ausgewählt ist.

4. Verfahren nach Anspruch 3, dadurch gekennzeichnet, daß das Cellulosederivat aus Celluloseacetat und Celluloseacetobutyrat ausgewählt ist.

5. Verfahren nach einem der Ansprüche 1 und 2, dadurch gekennzeichnet, daß die Celluloselösung zum Eintauchen oder Aufsprühen außerdem einen Weichmacher enthält.

6. Verfahren nach einem der vorangegangenen Ansprüche, dadurch gekennzeichnet, daß die auf dem metallischen Gegenstand aufgebrachte Cellulosederivat-Schicht eine Dicke zwischen 30 µm und 300 µm aufweist.

7. Verfahren nach Anspruch 1, dadurch gekennzeichnet, daß die metallische Oberfläche einer Vorbehandlung unterzogen wird.

8. Modeschmuckerzeugnis aus Metall oder einer Metall-Legierung, das dazu bestimmt ist, in Kontakt mit der Haut getragen zu werden, dadurch gekennzeichnet, daß es auf zumindest einem Teil seiner Oberfläche eine Außenschicht auf Cellulosederivat-Basis umfaßt.

9. Metallisches Kleidungsaccessoire, das dazu bestimmt ist, in Kontakt mit der Haut getragen zu werden, dadurch gekennzeichnet, daß es auf zumindest einem Teil seiner Oberfläche eine Außenschicht auf Cellulosederivat-Basis umfaßt.
